# FASCICULE DE BREVET EUROPEEN

(11) **EP 1 732 970 B1**
(45) Date de publication et mention de la délivrance du brevet: **13.07.2016**
(21) Numéro de dépôt: 05739463.7
(22) Date de dépôt: 15.03.2005
(51) Int. Cl.: B01J 31/10, C08G 63/82

(54) **UTILISATION D'UN SYSTEME CATALYTIQUE POUR LA (CO)OLIGOMERISATION DU LACTIDE ET DU GLYCOLIDE**
VERWENDUNG EINES KATALYTISCHEN SYSTEMS ZUR (CO)OLIGOMERISATION VON LACTID UND GLYKOLID
USE OF A CATALYTIC SYSTEM FOR LACTIDE AND GLYCOLIDE (CO)OLIGOMERIZATION

(30) Priorité: 16.03.2004 FR 0402671
(43) Date de publication de la demande: 20.12.2006
(73) Titulaire: IPSEN PHARMA, 92100 Boulogne-Billancourt (FR)
(72) Inventeur: BEN, Frédéric, F-64330 AYDIE (FR); BOURISSOU, Didier, F-31830 Plaisance du Touch (FR); CHERIF-CHEIKH, Roland, E-08860 Castelldefels (Barcelona) (ES); DE SOUSA DELGADO, Anne, E-08750 Moilins de Rei (Barcelona) (ES); GRAULLIER, Magalie, F-31400 Toulouse (FR); MARTIN-VACA, Blanca, F-31400 Toulouse (FR)
(74) Mandataire: Audonnet, Nathalie
(86) Numéro de dépôt international: PCT/FR2005/000616
(87) Numéro de publication internationale: WO 2005/100439

(56) Documents cités:
- EP-A- 0 624 613
- US-B1- 6 355 772
- PATENT ABSTRACTS OF JAPAN vol. 0070, no. 83 (C-160), 6 avril 1983 (1983-04-06) & JP 58 013624 A (MITSUI TOATSU KAGAKU KK), 26 janvier 1983 (1983-01-26)

## Description

La présente invention concerne l'utilisation d'un système constitué d'une résine échangeuse d'ions à caractère acide fort comme catalyseur et d'un additif de (co)oligomérisation, en tant que système catalytique de (co)oligomérisation du lactide et du glycolide par ouverture de cycle. La présente invention concerne également un procédé de (co)oligomérisation du lactide et du glycolide comprenant l'utilisation d'un tel système catalytique.

De nos jours, une attention croissante est portée aux polymères synthétiques pour l'élaboration d'organes artificiels et la formulation de médicaments [Chem. Eng. News 2001, 79 (6), 30]. Les polymères concernés doivent respecter un certain nombre de critères et, en particulier, ils doivent être biocompatibles. Le caractère biodégradable est un avantage supplémentaire si le polymère doit être éliminé après une période appropriée d'implantation dans un organisme. A cet égard, les copolymères à base d'acide lactique et glycolique (PLGA) présentent un très grand intérêt car ils sont sensibles à l'hydrolyse et sont dégradés *in vivo* avec libération de sous-produits non-toxiques. Le champ d'application des PLGA est très vaste (Adv. Mater. 1996, 8, 305 et Chemosphere 2001, 43, 49). Dans le domaine chirurgical, ils sont utilisés pour la synthèse de fils multi-brins, de sutures, d'implants, de prothèses... En pharmacologie, ils permettent l'encapsulation, le transfert et la libération contrôlée de principes actifs.

Pour toutes ces applications, le facteur clé est la vitesse de dégradation des PLGA qui dépend bien sûr de leur structure (longueur de chaîne, dispersité, proportion, stéréochimie et enchaînement des monomères...). Ces dernières années, de nombreux travaux ont donc été consacrés à la mise au point de catalyseurs et/ou amorceurs de (co)polymérisation, c'est-à-dire de polymérisation ou de copolymérisation, du lactide et du glycolide permettant de préparer des PLGA de structure contrôlée.

L'utilisation de systèmes métalliques conduit le plus souvent à une contamination des copolymères ainsi obtenus par la présence de sels métalliques, ce qui constitue parfois une limitation importante selon les applications envisagées. La mise au point de systèmes non-métalliques permettant la (co)polymérisation contrôlée du lactide et du glycolide constitue donc un enjeu majeur. La présente invention s'inscrit dans ce cadre et concerne plus particulièrement les (co)polymères du lactide et du glycolide de faible masse, c'est-à-dire les (co)oligomères du lactide et du glycolide.
La déposante propose donc l'utilisation d'un système catalytique simple, constitué d'un catalyseur et d'un additif de (co)oligomérisation, et qui permet de contrôler la longueur de chaîne mais également la nature des extrémités de chaîne des (co)oligomères préparés. L'utilisation d'une résine échangeuse d'ions comme catalyseur permet de séparer les oligomères du catalyseur de façon simple et efficace, le catalyseur pouvant être réutilisé sans perte d'activité.

US 6,355,772 décrit le polymérisation des lactides. Dans l'exemple 8, un catalyseur de type Amberlyst est utilisé.

La présente invention a donc pour objet l'utilisation d'un système catalytique constitué
(a) d'un catalyseur polymérique de type résine échangeuse d'ions à caractère acide fort (1), et
(b) d'un additif de (co)oligomérisation de formule générale (2)

   R¹-E-R² (2)

   dans laquelle
   E représente un élément du groupe 16 ;
   R¹ représente un atome d'hydrogène ou de deutérium ;
   R² représente un atome d'hydrogène ou de deutérium, ou un groupe de formule -E₁₄(R₁₄)(R'₁₄)(R"₁₄) ;
   E₁₄ est un élément du groupe 14 ;
   R₁₄, R'₁₄ et R"₁₄ représentent, indépendamment, l'atome d'hydrogène ; l'atome de deutérium ; l'un des radicaux substitués ou non-substitués suivants : alkyle, cycloallcyle ou aryle, et dans lesquels le ou lesdits substituants sont choisis parmi : halo, hydroxy, alkyle, alkoxy, cycloalkyle, cycloalkoxy, aryle, aryloxy, carboxy, alkoxycarbonyle, cycloalkoxycarbonyle et aryloxycarbonyle,
pour la (co)oligomérisation du lactide et du glycolide par ouverture de cycle.

L'expression halo signifie fluoro, chloro, bromo ou iodo, et de préférence chloro. L'expression alkyle représente un radical alkyle de 1 à 20 atomes de carbone. Cette expression couvre les radicaux alkyle ayant de 1 à 6 atomes de carbone linéaires ou ramifiés et en particulier les radicaux alkyle ayant de 1 à 4 atomes de carbone tels que les radicaux méthyle, éthyle, propyle, isopropyle, butyle, isobutyle, sec-butyle et tert-butyle. L'expression couvre également les radicaux comprenant plus de 6 atomes de carbone tels que les radicaux heptyle, octyle, nonyle, décyle, undécyle, docécyle, tridécyle, tétradécyle, pentadécyle, hexadécyle, heptadécyle, octadécyle, nonadécyle et eicosyle.

Le terme alkoxy désigne les radicaux dans lesquels le radical alkyle est un radical de 1 à 6 atomes de carbone tel que défini ci-dessus comme par exemple les radicaux méthoxy, éthoxy, propyloxy ou isopropyloxy mais également butoxy linéaire, secondaire ou tertiaire, pentyloxy. Le terme alkoxycarbonyle désigne de préférence les radicaux dans lesquels le radical alkoxy est tel que défini ci-dessus comme par exemple méthoxycarbonyle, éthoxycarbonyle.

Les radicaux cycloalkyles sont choisis parmi les cycloalkyles monocycliques saturés ou insaturés. Les radicaux cycloalkyles monocycliques saturés peuvent être choisis parmi les radicaux ayant de 3 à 7 atomes de carbone tels que les radicaux cyclopropyle, cyclobutyle, cyclopentyle, cyclohexyle ou cycloheptyle. Les radicaux cycloalkyles insaturés peuvent être choisis parmi les radicaux cyclobutène, cyclopentène, cyclohexène, cyclopentadiène, cyclohexadiène. Le terme cycloalkoxy désigne les radicaux dans lesquels le radical cycloalkyle est tel que défini ci-dessus comme par exemple les radicaux cyclopropyloxy, cyclobutyloxy, cyclopentyloxy, cyclohexyloxy, cycloheptyloxy, cyclobutènyloxy, cyclopentènyloxy, cyclohexènyloxy, cyclopentadiènyloxy, cyclohexadiènyloxy. Le terme cycloalkoxycarbonyle désigne les radicaux dans lesquels le radical cycloalkoxy est tel que défini ci-dessus comme par exemple les radicaux cyclopropyloxycarbonyle, cyclobutyloxycarbonyle, cyclopentyloxycarbonyle, cyclohexyloxycarbonyle, cycloheptyloxycarbonyle, cyclobutènyloxycarbonyle, cyclopentènyloxycarbonyle, cyclohexènyloxycarbonyle.

Les radicaux aryles peuvent être de type mono ou polycycliques. Les radicaux aryles monocycliques peuvent être choisis parmi les radicaux phényle optionnellement substitué par un ou plusieurs radicaux allyle tel que tolyle, xylyle, mésityle, cuményle. Les radicaux aryles polycycliques peuvent être choisis parmi les radicaux naphtyle, anthryle, phénanthryle. Le terme aryloxy désigne les radicaux dans lesquels le radical aryle est tel que défini ci-dessus comme par exemple les radicaux phényloxy, tolyloxy, naphtyloxy, anthryloxy et phénanthryloxy. Le terme aryloxycarbonyle désigne de préférence les radicaux dans lesquels le radical aryloxy est tel que défini ci-dessus, comme par exemple phényloxycarbonyle, tolyloxycarbonyle.

Dans la présente demande, le terme (co)oligomérisation signifie oligomérisation ou cooligomérisation avec des degrés de polymérisation (DP) inférieurs à 30. Ainsi la (co)oligomérisation du lactide et du glycolide couvre l'oligomérisation du lactide, l'oligomérisation du glycolide mais également la cooligomérisation du lactide et du glycolide.

Dans un système catalytique selon la présente invention, la quantité de monomère par rapport à l'additif de (co)oligomérisation est comprise entre 2 et 30 équivalents molaire et, de manière très préférentielle, entre 4 et 10 équivalents molaire.

L'invention a plus particulièrement pour objet l'utilisation d'un système catalytique telle que définie ci-dessus, caractérisée en ce que le catalyseur polymérique (1) est une résine macroréticulaire à base de styrène et de divinylbenzène à fonctions acide sulfonique.

De préférence, dans un système catalytique tel que défini ci-dessus, le catalyseur polymérique (1) est une résine macroréticulée de type Amberlyst^{®} ou Dowex^{®}, et très préférentiellement une résine de type Amberlyst^{®}.

Selon la présente invention, l'additif de (co)oligomérisation de formule (2) ainsi utilisé joue le rôle d'initiateur (ou d'amorceur) de la (co)oligomérisation. Sa présence est indispensable car en l'absence d'un tel composé de formule (2), les réactions de (co)oligomérisation sont beaucoup plus lentes, conduisent à des rendements beaucoup plus faibles, ne sont pas reproductibles, et ne sont donc pas exploitables industriellement.

L'invention a plus particulièrement pour objet l'utilisation d'un système catalytique telle que définie ci-dessus, caractérisée en ce que le composé de formule générale (2) est tel que
E représente un atome d'oxygène ou de soufre ;
R¹ représente un atome d'hydrogène ;
R² représente un atome d'hydrogène ou un groupe de formule -E₁₄(R₁₄)(R'₁₄)(R"₁₄) ;
E₁₄ est un atome de carbone ou de silicium ;
R₁₄, R'₁₄ et R"₁₄ représentent, indépendamment, l'atome d'hydrogène, ou l'un des radicaux substitués ou non-substitués suivants : alkyle, cycloalkyle ou aryle, dans lesquels le ou lesdits substituants sont choisis parmi : halo, alkyle, cycloalkyle, phényle, naphtyle, carboxy et alkoxycarbonyle,
et plus particulièrement,
E représente un atome d'oxygène ;
R¹ représente un atome d'hydrogène ;
R² représente un atome d'hydrogène ou un groupe de formule -E₁₄(R₁₄)(R'₁₄)(R"₁₄) ;
E'₁₄ est un atome de carbone ;
R₁₄, R'₁₄ et R"₁₄ représentent, indépendamment, l'atome d'hydrogène, ou un radical alkyle substitué ou non-substitué dans lequel le ou lesdits substituants sont choisis parmi allyle, carboxy et alkoxycarbonyle ;
et de manière très préférentielle
E représente un atome d'oxygène ;
R¹ un atome d'hydrogène ;
R² un atome d'hydrogène ou un groupe de formule -E₁₄(R₁₄)(R'₁₄)(R"₁₄) dans laquelle E₁₄ représente un atome de carbone et R₁₄, R'₁₄ et R"₁₄ représentent, indépendamment, l'atome d'hydrogène ou un radical alkyle.

L'invention a plus particulièrement pour objet l'utilisation d'un système catalytique tel que défini ci-dessus et caractérisée en ce que l'additif de (co)oligomérisation de formule générale (2) est soit l'eau soit un alcool. Selon la présente invention, cet alcool a pour formule R²-OH dans laquelle R² est tel que défini ci-dessus. Parmi les alcools, on peut citer par exemple le méthanol, l'éthanol, le n-propanol, l'isopropanol, le n-butanol, le pentan-1-ol, des alcools à chaîne plus longue tel que le dodécanol ou bien des alcools substitués tels que le lactate d'éthyle. De préférence, l'alcool utilisé dans un système catalytique tel que défini ci-dessus est un alcool aliphatique et très préférentiellement l'alcool aliphatique est choisi parmi l'isopropanol, le pentan-1-ol et le dodécan-1-ol.

L'invention a également pour objet un procédé de (co)oligomérisation du lactide et du glycolide par ouverture de cycle, procédé qui consiste à mettre en présence le ou les monomères considérés, un système catalytique tel que défini ci-dessus constitué d'un catalyseur polymérique de type résine échangeuse d'ions à caractère acide fort (1) et d'un additif de (co)oligomérisation de formule générale (2) dans un solvant d'oligomérisation.

Le solvant de la réaction est choisi parmi les solvants qui n'interfèrent pas avec la réaction catalytique elle-même. A titre d'exemple de tels solvants, on peut citer les hydrocarbures aromatiques (tels que le toluène, un xylène ou le mésitylène), éventuellement substitués par un ou plusieurs groupements nitro (tel que le nitrobenzène), les éthers (tels que le méthyl*tertio*butyléther, le tétrahydrofurane ou le dioxane), les halogénures aliphatiques ou aromatiques (tels que le dichlorométhane, le chloroforme, le dichloroéthane ou un dichlorobenzène).

Selon le procédé de la présente demande, les réactions sont conduites à des températures comprises entre -20° C et environ 150° C, de préférence entre 20° C et 80° C. Les durées de réaction sont comprises entre une heure et 64 heures, et de préférence entre 14 heures et 48 heures. La quantité de monomère par rapport à l'additif de (co)oligomérisation est comprise entre 2 et 30 équivalents molaire et, de manière très préférentielle, entre 4 et 10 équivalents molaire. Le rendement d'un procédé de (co)oligomérisation selon la présente invention est en général supérieur à 80 % et peut même atteindre les 100 % dans des conditions relativement douces (40° C, quelques heures) comme illustré dans les exemples.

L'invention a plus particulièrement pour objet également un procédé de (co)oligomérisation du lactide et du glycolide tel que défini ci-dessus, avec un système catalytique tel que défini ci-dessus et dont le catalyseur polymérique (1) est une résine macroréticulaire à base de styrène et de divinylbenzène à fonctions acide sulfonique. De préférence, le catalyseur polymérique (1) est une résine macroréticulée de type Amberlyst^{®} ou Dowex^{®}, et très préférentiellement une résine de type Amberlyst^{®}.

L'invention a plus particulièrement pour objet également un procédé de (co)oligomérisation tel que défini ci-dessus, avec un système catalytique tel que défini ci-dessus et le composé de formule générale (2) dans laquelle
E représente un atome d'oxygène ou de soufre ;
R¹ représente un atome d'hydrogène ;
R² représente un atome d'hydrogène ou un groupe de formule -E₁₄(R₁₄)(R'₁₄)(R"₁₄) ;
E₁₄ est un atome de carbone ou de silicium ;
R₁₄, R'₁₄ et R"₁₄ représentent, indépendamment, l'atome d'hydrogène, ou l'un des radicaux substitués ou non-substitués suivants : alkyle, cycloalkyle ou aryle, dans lesquels le ou lesdits substituants sont choisis parmi : halo, alkyle, cycloalkyle, phényle, naphtyle, carboxy et alkoxycarbonyle,
et plus particulièrement,
E représente un atome d'oxygène ;
R¹ représente un atome d'hydrogène ;
R² représente un atome d'hydrogène ou un groupe de formule -E₁₄(R₁₄)(R'₁₄)(R"₁₄) ;
E'₁₄ est un atome de carbone ;
R₁₄, R'₁₄ et R"₁₄ représentent, indépendamment, l'atome d'hydrogène, ou un radical alkyle substitué ou non-substitué dans lequel le ou lesdits substituants sont choisis parmi alkyle, carboxy et alkoxycarbonyle ;
et de manière très préférentielle
E représente un atome d'oxygène ;
R¹ un atome d'hydrogène ;
R² un atome d'hydrogène ou un groupe de formule -E₁₄(R₁₄)(R'₁₄)(R"₁₄) dans laquelle E₁₄ représente un atome de carbone et R₁₄, R'₁₄ et R"₁₄ représentent, indépendamment, l'atome d'hydrogène ou un radical alkyle.

L'invention a plus particulièrement pour objet un procédé de (co)oligomérisation du lactide et du glycolide tel que défini ci-dessus, avec un système catalytique dont l'additif de (co)oligomérisation est soit l'eau soit un alcool. De préférence, l'alcool est un alcool aliphatique et très préférentiellement l'alcool aliphatique est choisi parmi l'isopropanol, le pentan-1-ol et le dodécan-1-ol.

Le procédé de (co)oligomérisation du lactide et du glycolide par ouverture de cycle selon la présente invention permet donc de contrôler la nature des extrémités de chaîne des (co)oligomères et convient particulièrement bien pour l'obtention de (co)oligomères d'extrémités acide-alcool ou ester-alcool comme illustré dans la partie expérimentale. En fin de réaction, la résine peut être séparée de l'oligomère par simple filtration du milieu et la résine ainsi récupérée peut être réutilisée sans perte d'activité.

Le procédé de (co)oligomérisation du lactide et du glycolide selon la présente invention convient particulièrement bien pour l'obtention de (co)oligomères de masse comprise entre 300 et 5 000 Dalton, plus particulièrement entre 500 et 3 000 Dalton.

Le procédé de (co)oligomérisation du lactide et du glycolide selon la présente invention présente de nombreux avantages, en particulier,
- le système catalytique est constitué d'une résine échangeuse d'ions à caractère acide fort et d'un additif de (co)oligomérisation qui sont facilement accessibles et bon marché ;
- l'utilisation d'un additif comme initiateur de (co)oligomérisation permet non seulement d'améliorer très significativement le déroulement de la (co)oligomérisation mais également de contrôler précisément la longueur de chaîne qui est pratiquement égale au rapport initial monomère sur initiateur ;
- l'utilisation d'un additif comme initiateur de (co)oligomérisation permet également de contrôler la nature des extrémités de chaîne des (co)oligomères préparés ;
- la (co)oligomérisation peut être effectuée dans des conditions de température relativement douces, telles que 40° C, sans que les temps de réaction nécessaires à une conversion quasi-totale du ou des monomères ne dépassent quelques heures et au maximum 48 heures ;
- la distribution de masse des (co)oligomères obtenus est très étroite ; les indices de polydispersité des (co)oligomères obtenus selon la présente invention sont en effet compris entre 1,0 et 1,4 ;
- les (co)oligomères obtenus peuvent être facilement, rapidement et efficacement purifiés sans modification de leurs propriétés, la résine étant éliminée quantitativement par simple filtration.
- la résine ainsi récupérée garde ses propriétés et elle peut être réutilisée sans qu'une perte d'activité soit observée.

L'invention concerne enfin des oligomères ou co-oligomères du lactide et du glycolide obtenus ou susceptibles d'être obtenus par la mise en oeuvre d'un procédé tel que décrit ci-dessus. De tels (co)oligomères sont de faible masse comprise entre 300 et 5 000 Dalton, et plus particulièrement entre 500 et 3 000 Dalton. De tels (co)oligomères peuvent également présenter des extrémités contrôlées acide-alcool ou ester-alcool.

Les produits de formule générale (1) et (2) sont commerciaux ou peuvent être fabriqués par les méthodes connues de l'homme de métier.

A moins qu'ils ne soient définis d'une autre manière, tous les termes techniques et scientifiques utilisés dans la présente demande ont la même signification que celle couramment comprise par un spécialiste ordinaire du domaine auquel appartient l'invention. De même, toutes les publications, demandes de brevets et toutes autres références mentionnées dans la présente demande, sont incorporées par référence.

Les exemples suivants sont présentés pour illustrer les procédures ci-dessus et ne doivent en aucun cas être considérés comme une limite à la portée de l'invention.

### Exemple 1 : Préparation d'un oligomère du (D,L-lactide) à extrémités ester-alcool (Mw proche de 1 000 Da)

Dans un tube de Schlenk muni d'un barreau aimanté et purgé sous argon, on introduit successivement 3,00 g de D,L-lactide (0,021 mol), 20 mL de dichlorométhane, 3,00 g de résine Amberlyst^{®} 15 (0,0135 mol d'acide) et 0,41 mL de pentan-1-ol (0,0037 mol). Le mélange réactionnel est laissé sous agitation à 40° C pendant 45 heures. Les oligomères sont caractérisés par RMN du proton ; la conversion du monomère est supérieure à 95 %. Le milieu réactionnel est filtré pour éliminer la résine et le solvant évaporé sous pression réduite. Le résidu est repris avec du dichlorométhane (1 mL) et versé sous agitation sur du pentane (15 mL). Le surnageant est éliminé et après séchage sous vide, 2,8 g d'oligomères (83 %) sont obtenus sous forme de liquide incolore visqueux. Selon une analyse par GPC (Gel Permeation Chromatography) à l'aide d'un étalonnage réalisé à partir de standards de polystyrène (PS) de masses 400 à 400 000, l'échantillon est composé d'oligomères ayant des masses voisines (Mw = 1 036 Dalton, Mw/Mn = 1,22). La nature des extrémités de chaîne ester-alcool est déterminée par spectrométrie de masse (ionisation par électrospray, détection en mode ions positifs, échantillon dissout dans l'acétonitrile avec une trace d'hydroxyde d'ammonium).

### Exemple 2 : Préparation d'un oligomère du (D,L-lactide) à extrémités acide-alcool (Mw proche de 1 000 Da)

Dans un tube de Schlenk muni d'un barreau aimanté et purgé sous argon, on introduit successivement 23,80 g de D,L-lactide (0,165 mol), 200 mL de dichlorométhane, 23,73 g de résine Amberlyst^{®} 15 (0,1 11 mol d'acide) et 0,74 mL d'eau (0,041 mol). Le mélange réactionnel est laissé sous agitation à 40° C pendant 48 heures. Les oligomères sont caractérisés par RMN du proton ; la conversion du monomère est supérieure à 95 %. Le milieu réactionnel est filtré pour éliminer la résine et le solvant évaporé sous pression réduite. Le résidu est repris avec du dichlorométhane (6 mL) et versé sous agitation sur du pentane (120 mL). Le surnageant est éliminé et après séchage sous vide, 20,1 g d'oligomères (82 %) sont obtenus sous forme de liquide incolore visqueux. Selon une analyse par GPC (Gel Permeation Chromatography) à l'aide d'un étalonnage réalisé à partir de standards de polystyrène (PS) de masses 400 à 400 000, l'échantillon est composé d'oligomères ayant des masses voisines (Mw = 917 Dalton, Mw/Mn = 1,16). La nature des extrémités de chaîne acide-alcool est déterminée par spectrométrie de masse (ionisation par électrospray, détection en mode ions positifs, échantillon dissout dans l'acétonitrile avec une trace d'hydroxyde d'ammonium).

### Exemple 3 : Préparation d'un oligomère du (D,L-lactide) à extrémités ester-alcool (Mw < 1 000 Da)

Dans un tube de Schlenk muni d'un barreau aimanté et purgé sous argon, on introduit successivement 3,00 g de D,L-lactide (0,021 mol), 20 mL de dichlorométhane, 3,12 g de résine Amberlyst^{®} 15 (0,014 mol d'acide) et 0,59 mL de pentan-1-ol (0,0054 mol). Le mélange réactionnel est laissé sous agitation à 40° C pendant 40 heures. Les oligomères sont caractérisés par RMN du proton ; la conversion du monomère est supérieure à 95 %. Le milieu réactionnel est filtré pour éliminer la résine et le solvant évaporé sous pression réduite. Le résidu est repris avec du dichlorométhane (1 mL) et versé sous agitation sur du pentane (15 mL). Le surnageant est éliminé et après séchage sous vide, 3,2 g d'oligomères (89 %) sont obtenus sous forme de liquide incolore visqueux. Selon une analyse par GPC (Gel Permeation Chromatography) à l'aide d'un étalonnage réalisé à partir de standards de polystyrène (PS) de masses 400 à 400 000, l'échantillon est composé d'oligomères ayant des masses voisines (Mw = 597 Dalton, Mw/Mn = 1,3). La nature des extrémités de chaîne ester-alcool est déterminée par spectrométrie de masse (ionisation par électrospray, détection en mode ions positifs, échantillon dissout dans l'acétonitrile avec une trace d'hydroxyde d'ammonium).

### Exemple 4 : Préparation d'un co-oligomère (D,L-lactide/glycolide) 80/20 à extrémités ester-alcool (Mw < 1 000 Da)

Dans un tube de Schlenk muni d'un barreau aimanté et purgé sous argon, on introduit successivement 1,40 g de D,L-lactide (0,0097 mol), 0,30 g de glycolide (0,0026 mol), 15 mL de dichlorométhane, 1,20 g de résine Amberlyst^{®} 15 (0,006 mol d'acide) et 0,23 mL de pentan-1-ol (0,002 mol). Le mélange réactionnel est laissé sous agitation à 40° C pendant 40 heures. Les oligomères sont caractérisés par RMN du proton ; la conversion du monomère est supérieure à 95 %. Le rapport des intégrales des signaux correspondants à la partie polylactide (5,2 ppm) et polyglycolide (4,85 ppm) permet d'évaluer la composition du copolymère à 79 % de lactide et 21 % de glycolide. Le milieu réactionnel est filtré pour éliminer la résine et le solvant évaporé sous pression réduite. Le résidu est repris avec du dichlorométhane (1 mL) et versé sous agitation sur du pentane (15 mL). Le surnageant est éliminé et après séchage sous vide, 1,45 g d'oligomères (86 %) sont obtenus sous forme de liquide incolore visqueux. Selon une analyse par GPC (Gel Permeation Chromatography) à l'aide d'un étalonnage réalisé à partir de standards de polystyrène (PS) de masses 400 à 400 000, l'échantillon est composé d'oligomères ayant des masses voisines (Mw = 568 Dalton, Mw/Mn = 1,28). La nature des extrémités de chaîne ester-alcool est déterminée par spectrométrie de masse (ionisation par électrospray, détection en mode ions positifs, échantillon dissout dans l'acétonitrile avec une trace d'hydroxyde d'ammonium).

### Exemple 5 : Préparation d'un co-oligomère (DL-lactide/glycolide) 50/50 à extrémités ester n-pentyl- alcool (Mw > 1.000 Da)

Dans un ballon Schlenk muni d'un barreau aimanté et purgé sous argon, on introduit successivement 5,00 g de D,L-lactide (0,035 mol), 5,00 g de glycolide (0,043 mol), 60 mL de dichlorométhane, 10,00 g de résine Amberlyst^{®}15 (0,050 mol d'acide) et 1,83 mL de pentan-1-ol (0,0168 mol). Le mélange réactionnel est laissé sous agitation à reflux (45° C) pendant 40 heures. Les oligomères sont caractérisés par RMN du proton ; la conversion des monomères est supérieure à 95 %. Le rapport des intégrales des signaux correspondants à la partie polylactide (5,20 ppm) et polyglycolide (4,85 ppm) permet d'évaluer la composition du copolymère à 49 % de lactide et 51 % de glycolide. Le milieu réactionnel est filtré pour éliminer la résine et le solvant évaporé sous pression réduite. Le résidu est repris avec du dichlorométhane (3 mL) et versé sous agitation sur du pentane (44 mL). Le surnageant est éliminé et après séchage sous vide 7,50 g d'oligomères (65 %) sont obtenus sous forme de liquide incolore-blanchâtre visqueux. Selon une analyse GPC (Gel Permeation Chromatography) à l'aide d'un étalonnage réalisé à partir de standards de polystyrène (PS) de masses 400 à 400000, l'échantillon est composé d'oligomères ayant des masses molaires voisines (Mw = 1550 Dalton, Mw/Mn = 1,19). La nature des extrémités de chaîne ester-alcool est déterminée par spectrométrie de masse (ionisation par electrospray, détection en mode ions positifs, échantillon dissout dans l'acétonitrile avec une trace d'hydroxyde d'ammoniun).

### Exemple 6 : Préparation d'un co-oligomère (D,L-lactide/glycolide) 50/50 à extrémités ester n-dodécyl- alcool (Mw > 1.000 Da)

Dans un ballon Schlenk muni d'un barreau aimanté et purgé sous argon, on introduit successivement 5,00 g de D,L-lactide (0,035 mol), 5,00 g de glycolide (0,043 mol), 60 mL de dichlorométhane, 10,00 g de résine Amberlyst^{®} 15 (0,050 mol d'acide) et 3,82 mL de dodécan-1-ol (0,0168 mol). Le mélange réactionnel est laissé sous agitation à reflux (4-5° C) pendant 40 heures. Les oligomères sont caractérisés par RMN du proton ; la conversion du monomère est supérieure à 95 %. Le rapport des intégrales des signaux correspondants à la partie polylactide (5,20 ppm) et polyglycolide (4,85 ppm) permet d'évaluer la composition du copolymère à 53 % de lactide et 47 % de glycolide. Le milieu réactionnel est filtré pour éliminer la résine et le solvant évaporé sous pression réduite. Le résidu est repris avec du dichlorométhane (3 mL) et versé sous agitation sur du pentane (44 mL). Le surnageant est éliminé et après séchage sous vide 9,50 g d'oligomères (72 %) sont obtenus sous forme de liquide incolore-blanchâtre visqueux. Selon une analyse GPC (Gel Permeation Chromatography) à l'aide d'un étalonnage réalisé à partir de standards de polystyrène (PS) de masses 400 à 400 000, l'échantillon est composé d'oligomères ayant des masses molaires voisines (Mw = 1470 Dalton, Mw/Mn = 1,17). La nature des extrémités de chaîne ester-alcool est déterminée par spectrométrie de masse (ionisation par electrospray, détection en mode ions positifs, échantillon dissout dans l'acétonitrile avec une trace d'hydroxyde d'ammonium) -

### Exemple 7 : Préparation d'un oligomère (D,L-lactide) à extrémités ester n-dodécyl- alcool (Mw > 1.000 Da)

Dans un ballon Schlenk muni d'un barreau aimanté et purgé sous argon, on introduit successivement 5,00 g de D,L-lactide (0,035 mol), 30 mL de dichlorométhane, 5,00 g de résine Amberlyst^{®}15 (0,025 mol d'acide) et 1,42 mL de dodécan-1-ol (0,0063 mol). Le mélange réactionnel est laissé sous agitation à reflux (45° C) pendant 40 heures. Les oligomères sont caractérisés par RMN du proton ; la conversion du monomère est supérieure à 9 5 %. Le milieu réactionnel est filtré pour éliminer la résine et le solvant évaporé sous pression réduite. Le résidu est repris avec du dichlorométhane (1,5 mL) et versé sous agitation sur du pentane (22 mL). Le surnageant est éliminé et après séchage sous vide 4,70 g d'oligomères (76 %) sont obtenus sous forme de liquide incolore visqueux. Selon une analyse GPC (Gel Permeation Chromatography) à l'aide d'un étalonnage réalisé à partir de standards de polystyrène (PS) de masses 400 à 400000, l'échantillon est composé d'oligomères ayant des masses molaires voisines (Mw = 1209 Dalton, Mw/Mn = 1,3). La nature des extrémités de chaîne ester-alcool est déterminée par spectrométrie de masse (ionisation par electrospray, détection en mode ions positifs, échantillon dissout dans l'acétonitrile avec une trace d'hydroxyde d'ammonium).

### Exemple 8 : Préparation d'un oligomère (D,L-lactide) à extrémités ester n-pentyl-alcool (Mw > 2.000 Da)

Dans un ballon Schlenk muni d'un barreau aimanté et purgé sous argon, on introduit successivement 10,00 g de *D,L*-lactide (0,070 mol), 69 mL de dichlorométhane, 6,50 g de résine Amberlyst^{®}15 (0,0326 mol d'acide) et 0,50 mL de pentan-1-ol (0,0046 mol). Le mélange réactionnel est laissé sous agitation à reflux (45° C) pendant 168 heures. Les oligomères sont caractérisés par RMN du proton; la conversion du monomère est supérieure à 95 %. Le milieu réactionnel est filtré pour éliminer la résine et le solvant évaporé sous pression réduite. Le résidu est repris avec du dichlorométhane (3 mL) et versé sous agitation sur du pentane (44 mL). Le surnageant est éliminé et après séchage sous vide 8,20 g d'oligomères (79 %) sont obtenus sous forme de poudre blanche. Selon une analyse GPC (Gel Permeation Chromatography) à l'aide d'un étalonnage réalisé à partir de standards de polystyrène (PS) de masses 400 à 5000, l'échantillon est composé d'oligomères ayant des masses molaires voisines (Mw = 2096 Dalton, Mw/Mn = 1,27). La nature des extrémités de chaîne ester-alcool est déterminée par spectrométrie de masse (ionisation par electrospray, détection en mode ions positifs, échantillon dissout dans l'acétonitrile avec une trace d'hydroxyde d'ammonium).

## Revendications

1. Utilisation d'un système catalytique constitué
(a) d'un catalyseur polymérique de type résine échangeuse d'ions à caractère acide fort (1), et
(b) d'un additif de (co)oligomérisation de formule générale (2)
R¹-E-R² (2)
dans laquelle
E représente un élément du groupe 16 ;
R¹ représente un atome d'hydrogène ou de deutérium ;
R² représente un atome d'hydrogène ou de deutérium, ou un groupe de formule -E₁₄(R₁₄)(R'₁₄)(R"₁₄) ;
E₁₄ est un élément du groupe 14 ;
R₁₄, R'₁₄ et R"₁₄ représentent, indépendamment, l'atome d'hydrogène; l'atome de deutérium ; l'un des radicaux substitués ou non-substitués suivants : alkyle, cycloalkyle ou aryle, et dans lesquels le ou lesdits substituants sont choisis parmi : halo, hydroxy, alkyle, alkoxy, cycloalkyle, cycloalkoxy, aryle, aryloxy, carboxy, alkoxycarbonyle, cycloalkoxycarbonyle et aryloxycarbonyle,
pour la (co)oligomérisation du lactide et du glycolide par ouverture de cycle
**caractérisé en ce que** la quantité de monomère par rapport à l'additif de (co)oligomérisation est comprise entre 2 et 30 équivalents molaire.

2. Utilisation selon la revendication 1, **caractérisée en ce que** la quantité de monomère par rapport à l'additif de (co)oligomérisation est comprise entre et 10 équivalents molaire.

3. Utilisation selon l'une des revendications précédentes, **caractérisée en ce que** le catalyseur polymérique (1) est une résine macroréticulaire à base de styrène et de divinylbenzène à fonctions acide sulfonique.

4. Utilisation selon l'une des revendications précédentes, **caractérisée en ce que** le catalyseur polymérique (1) est une résine macroréticulée de type Amberlyst^{®} ou Dowex^{®}.

5. Utilisation selon la revendication 4, **caractérisée en ce que** le catalyseur polymérique (1) est une résine de type Amberlyst^{®}.

6. Utilisation selon l'une des revendications précédentes, **caractérisée en ce que** le composé de formule générale (2) est tel que
E représente un atome d'oxygène ou de soufre ;
R¹ représente un atome d'hydrogène ;
R² représente un atome d'hydrogène ou un groupe de formule -E₁₄(R₁₄)(R'₁₄)(R"₁₄) ;
E'₁₄ est un atome de carbone ou de silicium ;
R₁₄, R'₁₄ et R"₁₄ représentent, indépendamment, l'atome d'hydrogène, ou l'un des radicaux substitués ou non-substitués suivants : alkyle, cycloalkyle ou aryle, dans lesquels le ou lesdits substituants sont choisis parmi : halo, alkyle, cycloalkyle, phényle, naphtyle, carboxy et alkoxycarbonyle.

7. Utilisation selon l'une des revendications précédentes, **caractérisée en ce que** le composé de formule générale (2) est tel que
E représente un atome d'oxygène ;
R¹ représente un atome d'hydrogène ;
R² représente un atome d'hydrogène ou un groupe de formule -E₁₄(R₁₄)(R'₁₄)(R"₁₄) ;
E'₁₄ est un atome de carbone ;
R₁₄, R'₁₄ et R"₁₄ représentent, indépendamment, l'atome d'hydrogène, ou un radical alkyle substitué ou non-substitué dans lequel le ou lesdits substituants sont choisis parmi alkyle, carboxy et alkoxycarbonyle.

8. Utilisation selon l'une des revendications précédentes, **caractérisée en ce que** le composé de formule générale (2) est tel que
E représente un atome d'oxygène ;
R¹ un atome d'hydrogène ;
R² un atome d'hydrogène ou un groupe de formule -E₁₄(R₁₄)(R'₁₄)(R"₁₄) dans laquelle E₁₄ représente un atome de carbone et R₁₄, R'₁₄ et R"₁₄ représentent, indépendamment, l'atome d'hydrogène ou un radical alkyle.

9. Utilisation selon l'une des revendications précédentes, **caractérisée en ce que** le composé de formule générale (2) est soit l'eau soit un alcool.

10. Utilisation selon la revendication 9, **caractérisée en ce que** l'alcool est un alcool aliphatique.

11. Utilisation selon la revendication 10, **caractérisée en ce que** l'alcool aliphatique est choisi parmi l'isopropanol, le pentan-1-ol et le dodécan-1-ol.

12. Procédé de (co)oligomérisation du lactide et du glycolide par ouverture de cycle, procédé qui consiste à mettre en présence le ou les monomères considérés, un système catalytique tel que défini à l'une des revendications 1 à 11, et un solvant d'oligomérisation.

13. Procédé selon la revendication 12, **caractérisé en ce que** la température est comprise entre -20° C et environ 150° C.

14. Procédé selon la revendication 13, **caractérisé en ce que** le procédé s'effectue en solution à une température comprise entre 20° C et 80° C.

15. Procédé selon l'une des revendications 12 à 14, **caractérisé en ce que** la durée de réaction est comprise entre une heure et 64 heures, et de préférence entre 14 heures et 48 heures.

## Patentansprüche

1. Verwendung eines katalytischen Systems, bestehend aus
(a) einem polymeren Katalysator des Ionenaustauscherharztyps mit stark saurem Charakter (1), und
(b) einem (Co)oligomerisationsadditiv der allgemeinen Formel (2)
R¹-E-R² (2)
in der
E ein Element der Gruppe 16 darstellt;
R¹ ein Wasserstoffatom oder Deuteriumatom darstellt;
R² ein Wasserstoffatom oder Deuteriumatom oder eine Gruppe der Formel -E₁₄(R₁₄)(R'₁₄)(R"₁₄) darstellt;
E₁₄ ein Element der Gruppe 14 ist;
R₁₄, R'₁₄ und R"₁₄ unabhängig ein Wasserstoffatom; ein Deuteriumatom; einen der folgenden substituierten oder nicht-substituierten Reste darstellen: Alkyl, Cycloalkyl oder Aryl, in denen der oder die Substitutent(en) ausgewählt ist (sind) unter: Halogen, Hydroxy, Alkyl, Alkoxy, Cycloalkyl, Cycloalkoxy, Aryl, Aryloxy, Carboxy, Alkoxycarbonyl, Cycloalkoxycarbonyl und Aryloxycarbonyl,
zur (Co)oligomerisation des Lactids und des Glycolids durch Ringöffnung, **dadurch gekennzeichnet, dass** die Menge an Monomer, bezogen auf das (Co)oligomerisationsadditiv, zwischen 2 und 30 Moläquivalenten liegt.

2. Verwendung nach Anspruch 1, **dadurch gekennzeichnet, dass** die Menge an Monomer, bezogen auf das (Co)oligomerisationsadditiv, zwischen 4 und 10 Moläquivalenten liegt.

3. Verwendung nach einem der vorangehenden Ansprüche, **dadurch gekennzeichnet, dass** der polymere Katalysator (1) ein makroretikuläres Harz auf der Basis von Styrol und von Divinylbenzol mit Sulfonsäurefunktionen ist.

4. Verwendung nach einem der vorangehenden Ansprüche, **dadurch gekennzeichnet, dass** der polymere Katalysator (1) ein makrovernetztes Harz des Typs Amberlyst^{®} oder Dowex^{®} ist.

5. Verwendung nach Anspruch 4, **dadurch gekennzeichnet, dass** der polymere Katalysator (1) ein Harz des Amberlyst^{®}-Typs ist.

6. Verwendung nach einem der vorangehenden Ansprüche, **dadurch gekennzeichnet, dass** die Verbindung der allgemeinen Formel (2) so ist, dass
E ein Sauerstoffatom oder Schwefelatom darstellt;
R¹ ein Wasserstoffatom darstellt;
R² ein Wasserstoffatom oder eine Gruppe der Formel -E₁₄(R₁₄)(R'₁₄)(R"₁₄) darstellt;
E'₁₄ ein Kohlenstoffatom oder Siliciumatom ist;
R₁₄, R'₁₄ und R"₁₄ unabhängig ein Wasserstoffatom oder einen der folgenden substituierten oder nicht-substituierten Reste darstellen: Alkyl, Cycloalkyl oder Aryl, in denen der oder die Substitutent(en) ausgewählt ist (sind) unter: Halogen, Alkyl, Cycloalkyl, Phenyl, Naphthyl, Carboxy und Alkoxycarbonyl.

7. Verwendung nach einem der vorangehenden Ansprüche, **dadurch gekennzeichnet, dass** die Verbindung der allgemeinen Formel (2) so ist, dass
E ein Sauerstoffatom darstellt;
R¹ ein Wasserstoffatom darstellt;
R² ein Wasserstoffatom oder eine Gruppe der Formel -E₁₄(R₁₄)(R'₁₄)(R"₁₄) darstellt;
E'₁₄ ein Kohlenstoffatom ist;
R₁₄, R'₁₄ und R"₁₄ unabhängig ein Wasserstoffatom oder einen substituierten oder nicht-substituierten Alkylrest, in dem der oder die Substitutent(en) aus Alkyl, Carboxy und Alkoxycarbonyl ausgewählt ist (sind), darstellen.

8. Verwendung nach einem der vorangehenden Ansprüche, **dadurch gekennzeichnet, dass** die Verbindung der allgemeinen Formel (2) so ist, dass
E ein Sauerstoffatom darstellt;
R¹ ein Wasserstoffatom darstellt;
R² ein Wasserstoffatom oder eine Gruppe der Formel -E₁₄(R₁₄)(R'₁₄)(R"₁₄), in der E₁₄ ein Kohlenstoffatom darstellt und R₁₄, R'₁₄ und R"₁₄ unabhängig ein Wasserstoffatom oder einen Alkylrest darstellen, darstellt.

9. Verwendung nach einem der vorangehenden Ansprüche, **dadurch gekennzeichnet, dass** die Verbindung der allgemeinen Formel (2) entweder Wasser oder ein Alkohol ist.

10. Verwendung nach Anspruch 9, **dadurch gekennzeichnet, dass** der Alkohol ein aliphatischer Alkohol ist.

11. Verwendung nach Anspruch 10, **dadurch gekennzeichnet, dass** der aliphatische Alkohol aus Isopropanol, Pentan-1-ol und Dodecan-1-ol ausgewählt ist.

12. Verfahren zur (Co)oligomerisation des Lactids und des Glycolids durch Ringöffnung, wobei das Verfahren darin besteht, das in Betracht gezogene Monomer oder die in Betracht gezogenen Monomeren, ein katalytisches System, wie es in einem der Ansprüche 1 bis 11 definiert ist, und ein Oligomerisationslösungsmittel bereitzustellen.

13. Verfahren nach Anspruch 12, **dadurch gekennzeichnet, dass** die Temperatur zwischen -20 °C und etwa 150 °C liegt.

14. Verfahren nach Anspruch 13, **dadurch gekennzeichnet, dass** das Verfahren in Lösung bei einer Temperatur zwischen 20 °C und 80 °C durchgeführt wird.

15. Verfahren nach einem der Ansprüche 12 bis 14, **dadurch gekennzeichnet, dass** die Dauer der Reaktion zwischen einer Stunde und 64 Stunden und vorzugsweise zwischen 14 Stunden und 48 Stunden beträgt.

## Claims

1. Use of a catalytic system constituted by
(a) a strongly acidic ion-exchange resin-type polymeric catalyst (1), and
(b) a (co)oligomerization additive of general formula (2)
R¹-E-R² (2)
in which
E represents an element of group 16;
R¹ represents a hydrogen or deuterium atom;
R² represents a hydrogen or deuterium atom, or a group of formula -E₁₄(R₁₄)(R'₁₄)(R"₁₄);
E₁₄ is an element of group 14;
R₁₄, R'₁₄ and R"₁₄ represent, independently, the hydrogen atom; the deuterium atom; one of the following substituted or non-substituted radicals: alkyl, cycloalkyl or aryl, and in which said substituent or substituents are chosen from: halo, hydroxy, alkyl, alkoxy, cycloalkyl, cycloalkoxy, aryl, aryloxy, carboxy, alkoxycarbonyl, cycloalkoxycarbonyl and aryloxycarbonyl,
for the (co)oligomerization of lactide and glycolide by ring opening,
**characterized in that** the quantity of monomer relative to the (co)oligomerization additive is comprised between 2 and 30 molar equivalents.

2. Use according to claim 1, **characterized in that** the quantity of monomer relative to the (co)oligomerization additive is comprised between 4 and 10 molar equivalents.

3. Use according to one of the preceding claims, **characterized in that** the polymeric catalyst (1) is a styrene and divinylbenzene-based macroreticular resin with sulphonic acid functions.

4. Use according to one of the preceding claims, **characterized in that** the polymeric catalyst (1) is a macroreticular resin of the Amberlyst^{®} or Dowex^{®}type.

5. Use according to claim 4, **characterized in that** the polymeric catalyst (1) is a resin of the Amberlyst^{®} type.

6. Use according to one of the preceding claims, **characterized in that** the compound of general formula (2) is such that
E represents an oxygen or sulphur atom;
R¹ represents a hydrogen atom;
R² represents a hydrogen atom or a group of formula -E₁₄(R₁₄)(R'₁₄)(R"₁₄);
E₁₄ is a carbon or silicon atom;
R₁₄, R'₁₄ and R"₁₄ represent, independently, the hydrogen atom, or one of the following substituted or non-substituted radicals: alkyl, cycloalkyl or aryl, in which said substituent or substituents are chosen from: halo, alkyl, cycloalkyl, phenyl, naphthyl, carboxy and alkoxycarbonyl.

7. Use according to one of the preceding claims, **characterized in that** the compound of general formula (2) is such that
E represents an oxygen atom;
R¹ represents a hydrogen atom;
R² represents a hydrogen atom or a group of formula -E₁₄(R₁₄)(R'₁₄)(R"₁₄);
E'₁₄ is a carbon atom;
R₁₄, R'₁₄ and R"₁₄ represent, independently, the hydrogen atom, or a substituted or non-substituted alkyl radical in which said substituent or substituents are chosen from alkyl, carboxy and alkoxycarbonyl.

8. Use according to one of the preceding claims, **characterized in that** the compound of general formula (2) is such that
E represents an oxygen atom;
R₁ a hydrogen atom;
R² a hydrogen atom or a group of formula -E₁₄(R₁₄)(R'₁₄)(R"₁₄) in which E₁₄ represents a carbon atom and R₁₄, R'₁₄ and R"₁₄ represent, independently, the hydrogen atom or an alkyl radical.

9. Use according to one of the preceding claims, **characterized in that** the compound of general formula (2) is either water or an alcohol.

10. Use according to claim 9, **characterized in that** the alcohol is an aliphatic alcohol.

11. Use according to claim 10, **characterized in that** the aliphatic alcohol is chosen from isopropanol, pentan-1-ol and dodecan-1-ol.

12. A (co)oligomerization process of lactide and glycolide by the ring-opening, said process which consists in bringing together the monomer or monomers considered, a catalytic system as defined in one of claims 1 to 11, and an oligomerization solvent.

13. Process according to claim 12, **characterized in that** the temperature is comprised between -20°C and approximately 150°C.

14. Process according to claim 13, **characterized in that** the process is carried out in solution at a temperature comprised between 20°C and 80°C.

15. Process according to one of claims 12 to 14, **characterized in that** the reaction time is comprised between one hour and 64 hours, and preferably between 14 hours and 48 hours.
